# EUROPEAN PATENT APPLICATION

(11) **EP 4 702 892 A1**
(43) Date of publication of application: **04.03.2026**
(21) Application number: 25179684.3
(22) Date of filing: 29.05.2025
(51) Int. Cl.: A47J 31/44

(54) **A MODULAR BEVERAGE PREPARATION MACHINE**

(30) Priority: 03.09.2024 TR 2024116070
(71) Applicant: Arçelik Anonim Sirketi, 34445 Istanbul (TR)
(72) Inventor: SEYHAN, BEDRI, 34445 ISTANBUL (TR); ARER, CAN, 34445 ISTANBUL (TR); SEVEN, ONER, 34445 ISTANBUL (TR); DUMAN, DUHAN, 34445 ISTANBUL (TR); SENYAYLA, CAN BERK, 34445 ISTANBUL (TR)

(57) **Abstract**

The present invention relates to a beverage preparation machine (1) comprising a body (2); an inlet port (3) which is connected to the body (2); an L-shaped hose (4) which is attached to the inlet port (3); an outlet port (5) which is attached to the other end of the hose (4); a spraying member (13) which is connected to the outlet port (5); a sheath (14) which surrounds the spraying member (13); a ball joint (6) having a bearing (7) which completely surrounds the inlet port (3) and a socket (8) which surrounds the bearing (7) and which is connected to the elbow section of the hose (4); and a connection member (9) which is disposed between the socket (8) and the spraying member (13). By means of the present invention, both the radial angle of the spraying member (13) and the sheath (14) relative to the inlet port (3) and the distance thereof to the body (2) are changed.

## Description

The present invention relates to a beverage preparation machine comprising a spraying member which is used to prepare milk foam.

In beverage preparation machines, especially in coffee makers used to prepare beverages with milk foam, hot milk foam is obtained by mixing hot steam coming from the steam wand with milk. The user performs the foaming process by immersing the said steam wand into the milk container. Over time, the steam wand becomes clogged due to milk residues, dirt, and similar factors, leading to a decrease in foaming performance.

Moreover, in the state of the art embodiments, the steam wand is integrated into the coffee maker. In the said embodiments, the users are unable to obtain microfoam sufficient for creating creamy textures or 'latte art', or milk heated beyond a certain level. Furthermore, in the said embodiments, when hot water is required to be taken from the spraying member, a clear water flow cannot be achieved due to the shared duct with the milk.

In the state of the art International Patent Applications No. WO2012093157 and WO2011135479, a beverage preparation machine is disclosed, comprising a second device which is connected to the coffee maker and which comprises a steam wand.

In the state of the art United States Patent Application No. US2009301310, an application is disclosed, which ensures that foam or hot water is transferred directly to the cup over the same axis as the coffee nozzle.

In the state of the art Chinese Utility Model Document Application No. CN208510756U, it is disclosed that the double-elbowed steam wand provides a great convenience to move the wand forward.

The aim of the present invention is the realization of a beverage preparation machine having an ergonomic and modular spraying member.

The beverage preparation machine realized in order to attain the aim of the present invention and explicated in the first and the respective claims thereof comprises a body; an inlet port which is connected to the body; an L-shaped hose which is attached to the inlet port; an outlet port which is attached to the other end of the hose; a spraying member which is connected to the outlet port; a sheath which surrounds the spraying member; a ball joint having a bearing which completely surrounds the inlet port and a socket which surrounds the bearing and which is connected to the elbow section of the hose; and a connection member which is disposed between the socket and the spraying member.

In the embodiment of the present invention, hot water and/or hot steam passes from the inlet port to the hose, then to the outlet port. The hot water and/or the hot steam proceeds to the spraying member through the outlet port to be transferred into the container. By means of the ball joint, the hose, the outlet port and the spraying member can be rotated in the desired direction, thus providing an ergonomic and easy transfer of hot water and/or hot steam into the container. By means of the freedom of movement provided to the spraying member and the sheath by the ball joint, the foam can be heated to the desired level, and the foam level can be adjusted.

In an embodiment of the present invention, the beverage preparation machine comprises one or more guides which are disposed on the periphery of the bearing and at least one slit which is provided on the inner periphery of the socket and wherein the guide fits. As the user rotates the socket around the bearing, the guide on the outer periphery of the bearing fits into the slit, and in this position, the radial angle and distance of the spraying member from the body are adjusted. By means of the ease of separating the bearing and the socket which form the ball joint, the spraying member can be easily attached to and detached from the beverage preparation machine in a modular manner. Thus, the spraying member and the sheath can be easily removed from the beverage preparation machine for cleaning and reattached to the same. Moreover, by means of the ability to be moved to the left, right, center, and front positions, the spraying member and the sheath can be easily positioned according to the cup's location and to facilitate foaming, providing direct hot water flow into the cup and easy foaming.

In the preferred embodiment of the present invention, the beverage preparation machine comprises one guide and four slits. Thus, the spraying member and the sheath are enabled to move in four different radial positions and, in each radial position, to move forward and backward.

In the embodiment of the present invention, since only the hot steam exits from the spraying member, only the hot water is obtained.

In the embodiment of the present invention, the hot water passes from the inlet port to the hose, then to the outlet port. The hot water proceeds to the spraying member through the outlet port to be transferred into the container. By means of the ball joint, by rotating the socket around the bearing, the position of the spraying member and the sheath is adjusted, and the guide on the bearing fits into the slit on the socket and is fixed in this position. By directing the spraying member and the sheath into the container, the hot water is enabled to be transferred into the container.

In the embodiment of the present invention, the hot steam passes from the inlet port to the hose, then to the outlet port. The hot steam proceeds to the spraying member through the outlet port to be transferred into the container. By means of the ball joint, by rotating the socket around the bearing, the position of the spraying member and the sheath is adjusted, and the guide on the bearing fits into the slit on the socket and is fixed in this position. By immersing the spraying member and the sheath into the milk container and supplying hot steam, the milk is heated, and the milk foaming process is performed.

By means of the present invention, the spraying member and the sheath are rotated in the desired direction, and the hot water and/or the hot steam can be transferred into the container in an ergonomic and easy manner.

In another embodiment of the present invention, the beverage preparation machine comprises a switching member which is positioned at an angle determined by the manufacturer and which is triggered when the ball joint is brought to the said angle. In the embodiment of the present invention, the said switching member restricts or completely blocks the flow of steam. By means of the present invention, by shifting the ball joint to different positions, separate functions for the hot water and the hot steam can be defined at specific angles.

In another embodiment of the present invention, the beverage preparation machine comprises a grip which is disposed on the connection member and which enables the user to easily move the spraying member and the sheath. By means of the grip, the user is enabled to move the spraying member and the sheath thanks to the ball joint without being exposed to the hot water and/or the hot steam.

By means of the present invention, thanks to the ability of the spraying member and the sheath to be easily detached from the beverage preparation machine without using any tools, all parts which come into contact with the milk can be disassembled and cleaned. Moreover, the ergonomic design provided by the ball joint to the spraying member and the sheath, enabling the same to move radially to the right, left, and forward is highly important for ease of use. Furthermore, the easy attachability and detachability provide significant advantages in terms of easy cleaning and modularity.

A beverage preparation machine realized in order to attain the aim of the present invention is illustrated in the attached figures, where:
Figure 1 - is the perspective view of a beverage preparation machine.
Figure 2 - is the perspective view of a spraying member, a sheath and a ball joint together.
Figure 3 - is the exploded perspective view of the spraying member, the sheath and the ball joint.

The elements illustrated in the figures are numbered as follows.
1. Beverage preparation machine
2. Body
3. Inlet port
4. Hose
5. Outlet port
6. Ball joint
7. Bearing
8. Socket
9. Connection member
10. Guide
11. Slit
12. Grip
13. Spraying member
14. Sheath

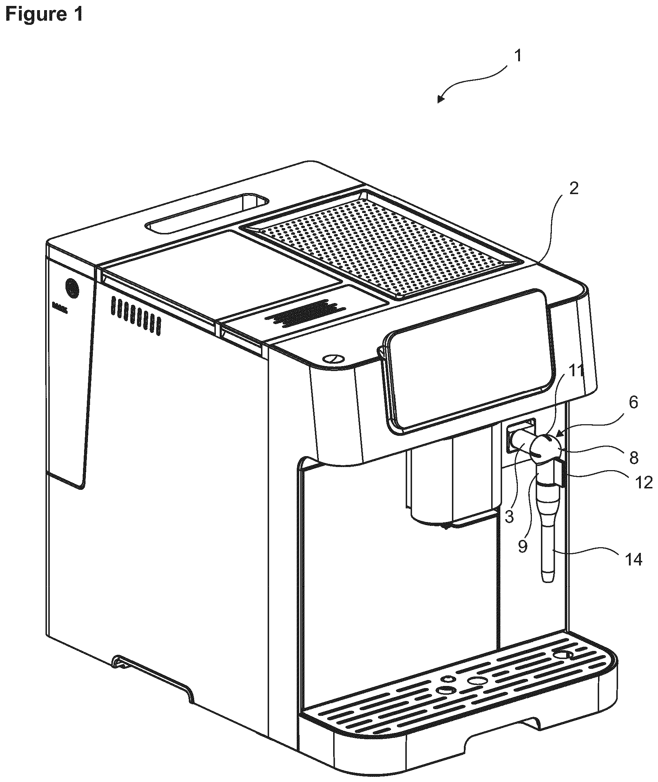

The beverage preparation machine (1) comprises a body (2); an inlet port (3) which is connected to the body (2); an L-shaped hose (4) which is attached to the inlet port (3); an outlet port (5) which is attached to the other end of the hose (4); a spraying member (13) which is connected to the outlet port (5); a sheath (14) which surrounds the spraying member (13); a ball joint (6) having a bearing (7) which completely surrounds the inlet port (3) and a socket (8) which surrounds the bearing (7) and which is connected to the elbow section of the hose (4); and a connection member (9) which is disposed between the socket (8) and the spraying member (13) (Figure 1). By means of the present invention, both the radial angle of the spraying member (13) and the sheath (14) relative to the inlet port (3) and the distance thereof to the body (2) are changed.

In the embodiment of the present invention, hot water and/or hot steam passes from the inlet port (3) to the hose (4), then to the outlet port (5). The hot water and/or the hot steam proceeds to the spraying member (13) through the outlet port (5) to be transferred into the container. By means of the ball joint (6), the hose (4), the outlet port (5) and the spraying member (13) can be rotated in the desired direction, thus providing an ergonomic and easy transfer of hot water and/or hot steam into the container. By means of the freedom of movement provided to the spraying member (13) and the sheath (14) by the ball joint (6), the foam can be heated to the desired level, and the foam level can be adjusted.

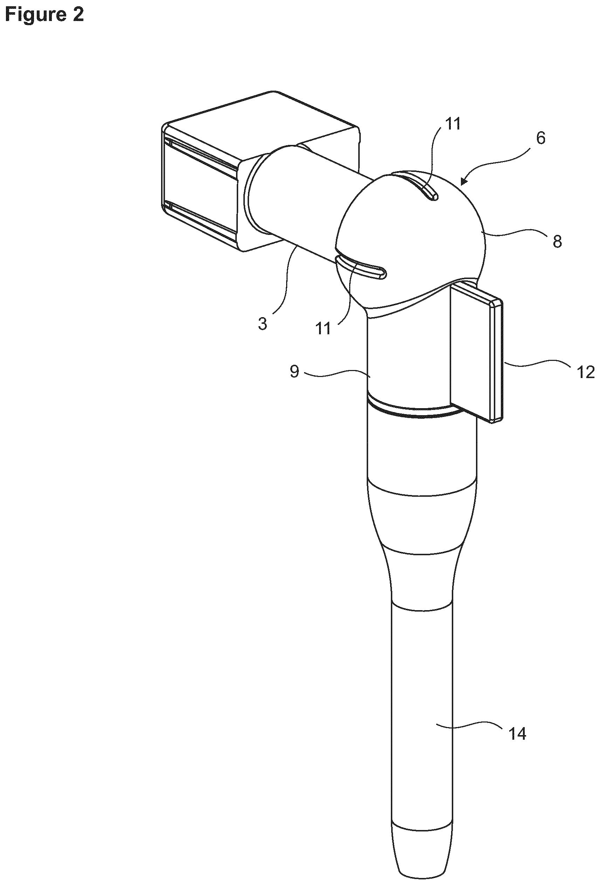

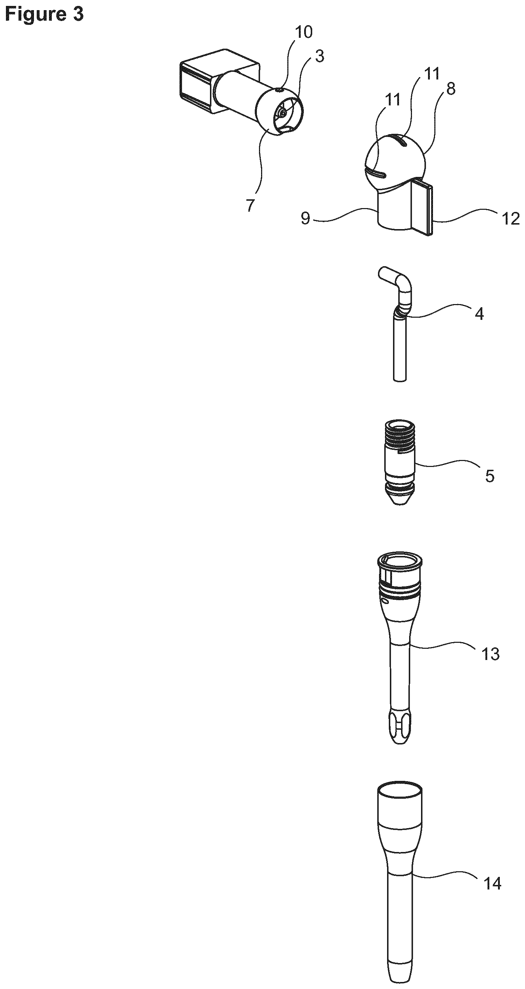

In an embodiment of the present invention, the beverage preparation machine (1) comprises one or more guides (10) which are disposed on the periphery of the bearing (7) and at least one slit (11) which is provided on the inner periphery of the socket (8) and wherein the guide (10) fits. As the user rotates the socket (8) around the bearing (7), the guide (10) on the outer periphery of the bearing (7) fits into the slit (11), and in this position, the radial angle and distance of the spraying member (13) and the sheath (14) from the body (2) are adjusted. By means of the ease of separating the bearing (7) and the socket (8) which form the ball joint (6), the spraying member (13) can be easily attached to and detached from the beverage preparation machine (1) in a modular manner. Thus, the spraying member (13) and the sheath (14) can be easily removed from the beverage preparation machine (1) for cleaning and reattached to the same. Moreover, by means of the ability to be moved to the left, right, center, and front positions, the spraying member (13) and the sheath (14) can be easily positioned according to the cup's location and to facilitate foaming, providing direct hot water flow into the cup and easy foaming (Figure 2 and Figure 3).

In the embodiment of the present invention, the guide (10) is a ball.

In the preferred embodiment of the present invention, the beverage preparation machine (1) comprises one guide (10) and four slits (11). Thus, the spraying member (13) and the sheath (14) are enabled to move in four different radial positions and, in each radial position, to move forward and backward.

In the embodiment of the present invention, since only the hot steam exits from the spraying member (13), only the hot water is obtained.

In the embodiment of the present invention, the hot water passes from the inlet port (3) to the hose (4), then to the outlet port (5). The hot water proceeds to the spraying member (13) through the outlet port (5) to be transferred into the container. By means of the ball joint (6), by rotating the socket (8) around the bearing (7), the position of the spraying member (13) and the sheath (14) is adjusted, and the guide (10) on the bearing (7) fits into the slit (11) on the socket (8) and is fixed in this position. By directing the spraying member (13) and the sheath (14) into the container, the hot water is enabled to be transferred into the container.

In the embodiment of the present invention, the hot steam passes from the inlet port (3) to the hose (4), then to the outlet port (5). The hot steam proceeds to the spraying member (13) through the outlet port (5) to be transferred into the container. By means of the ball joint (6), by rotating the socket (8) around the bearing (7), the position of the spraying member (13) and the sheath (14) is adjusted, and the guide (10) on the bearing (7) fits into the slit (11) on the socket (8) and is fixed in this position. By immersing the spraying member (13) and the sheath (14) into the milk container and supplying hot steam, the milk is heated, and the milk foaming process is performed.

By means of the present invention, the spraying member (13) and the sheath (14) are rotated in the desired direction, and the hot water and/or the hot steam can be transferred into the container in an ergonomic and easy manner.

In another embodiment of the present invention, the beverage preparation machine (1) comprises a switching member (not shown in figures) which is positioned at an angle determined by the manufacturer and which is triggered when the ball joint (6) is brought to the said angle. In the embodiment of the present invention, the said switching member restricts or completely blocks the flow of steam. By means of the present invention, by shifting the ball joint (6) to different positions, separate functions for the hot water and the hot steam can be defined at specific angles.

In another embodiment of the present invention, the beverage preparation machine (1) comprises a grip (12) which is provided on the connection member (9). By means of the grip (12), the user is enabled to easily move the spraying member (13) and the sheath (14). Moreover, during the said movement, the user is enabled to move the spraying member (13) and the sheath (14) without being exposed to the hot water and/or the hot steam.

By means of the present invention, thanks to the ability of the spraying member (13) and the sheath (14) to be easily detached from the beverage preparation machine (1) without using any tools, all parts which come into contact with the milk can be disassembled and cleaned. Moreover, the ergonomic design provided by the ball joint (6) to the spraying member (13) and the sheath (14), enabling the same to move radially to the right, left, and forward is highly important for ease of use. Furthermore, the easy attachability and detachability provide significant advantages in terms of easy cleaning and modularity.

## Claims

1. A beverage preparation machine (1) **comprising** a body (2); an inlet port (3) which is connected to the body (2); an L-shaped hose (4) which is attached to the inlet port (3); an outlet port (5) which is attached to the other end of the hose (4); a spraying member (13) which is connected to the outlet port (5); and a sheath (14) which surrounds the spraying member (13); **characterized by** a ball joint (6) having a bearing (7) which completely surrounds the inlet port (3) and a socket (8) which surrounds the bearing (7) and which is connected to the elbow section of the hose (4), and a connection member (9) which is disposed between the socket (8) and the spraying member (13).

2. A beverage preparation machine (1) as in Claim 1, **characterized by** the spraying member (13) and the sheath (14) of which the radial angle relative to the inlet port (3) can be changed.

3. A beverage preparation machine (1) as in Claim 1 or Claim 2, **characterized by** the spraying member (13) and the sheath (14) of which the distance from the body (2) can be changed.

4. A beverage preparation machine (1) as in Claim 1, **characterized by** one or more guides (10) which are disposed on the periphery of the bearing (7) and at least one slit (11) which is provided on the inner periphery of the socket (8) and wherein the guide (10) fits.

5. A beverage preparation machine (1) as in Claim 4, **characterized by** one guide (1) and four lists (11).

6. A beverage preparation machine (1) as in Claim 4 or Claim 5, **characterized by** the guide (10) which is a ball.

7. A beverage preparation machine (1) as in Claim 1, **characterized by** a switching member which is positioned at an angle determined by the manufacturer and which is triggered when the ball joint (6) is brought to the said angle.

8. A beverage preparation machine (1) as in Claim 7, **characterized by** the switching member which restricts or completely blocks the flow of steam.

9. A beverage preparation machine (1) as in Claim 1, **characterized by** a grip (12) which is provided on the connection member (9).
